**Europäisches Patentamt**

**European Patent Office**

**Office européen des brevets**

(19)

(11) Veröffentlichungsnummer : **0 414 948 B1**

(12)

# EUROPÄISCHE PATENTSCHRIFT

(45) Veröffentlichungstag der Patentschrift :
**03.06.92 Patentblatt 92/23**

(51) Int. Cl.$^5$ : **B60H 1/00**

(21) Anmeldenummer : **89116122.6**

(22) Anmeldetag : **31.08.89**

(54) **Heiz- bzw. Klimagerät für ein Kraftfahrzeug.**

(43) Veröffentlichungstag der Anmeldung :
**06.03.91 Patentblatt 91/10**

(45) Bekanntmachung des Hinweises auf die
Patenterteilung :
**03.06.92 Patentblatt 92/23**

(84) Benannte Vertragsstaaten :
**DE FR**

(56) Entgegenhaltungen :
**EP-A- 0 050 331**
**EP-A- 0 184 621**
**FR-A- 2 523 904**
**US-A- 4 222 435**

(73) Patentinhaber : **SIEMENS**
**AKTIENGESELLSCHAFT**
**Wittelsbacherplatz 2**
**W-8000 München 2 (DE)**

(72) Erfinder : **Kalthoff, Gerd-Otto**
**Reinschartenweg 23 A**
**W-8520 Erlangen (DE)**
Erfinder : **Hartleb, Thomas, Dipl.-Ing. (FH)**
**Kleinwalwurer Strasse 13**
**W-8638 Meeder (DE)**

## Beschreibung

Die Erfindung bezieht sich auf ein Heiz- bzw. Klimagerät für ein Kraftfahrzeug gemäß Oberbegriff des Anspruchs 1; ein derartiges Heiz- bzw. Klimagerät ist duch die EP-A-0 050 331 bekannt.

Bei dem durch die EP-A-0 050 331 bekannten Heiz- bzw. Klimagerät der vorgenannten Art werden durch eine Regelelektronik aufgrund eines vorgegebenen Innentemperatur-Sollwertes und unter Berücksichtigung von verschiedenen Ist-Werten, wie z.B. der Außentemperatur und der augenblicklichen Innentemperatur optimale Einstellwerte zumindest für die Luftverteilung und die Luftmenge ausgerechnet und über nachgeschaltete Aktoren und Treiber vollautomatisch eingestellt; die über die Aktoren eingestellten Werte können in Displays auch visualisiert werden.

Eine gegenüber einer derartigen vollautomatischen Heiz- bzw. Klimaregelung aufwandsärmere und trotzdem wesentliche Vorteile einer solchen Regelung mitumfassende und gleichzeitig eine individuelle Steuerung der Luftverteilung und/oder Luftmenge nicht ausschließendes Heiz- und Klimagerät kann nach der Erfindung durch die Lehre des Anspruchs 1 geschaffen werden. Zweckmäßigerweise werden die errechneten Einstellwerte für eine geführte externe Einstellung an die Bedienperson in Form einer Kette von Anzeigeleuchten, insbesondere LED-Anzeigen (Light Emitting Diodes), dargestellt, die nach einer Ausgestaltung der Erfindung entlang des Einstellweges des Luftverteilungs-Einstellmittels bzw. des Luftmengen-Einstellmittels angeordnet und jeweils in der errechneten Einstellposition für das entsprechend nachzuführende Einstellmittel aufleuchten. Der Fahrzeuginsasse kann somit dann dieser Empfehlung auf der im wesentlichen im Design unveränderten Bedienebene durch manuelles Nachführen der Einstellmittel folgen und damit die für seine Anlage und die aufgrund der Umweltbedingungen je im Augenblick optimale Einstellung wählen, ohne dafür die hohen Kosten einer Vollautomatik tragen zu müssen. Andererseits kann er unabhängig von einer übergreifenden Automatik eine von deren Empfehlung abweichende individuelle Einstellung vornehmen, die von der Automatik nicht mehr verändert wird.

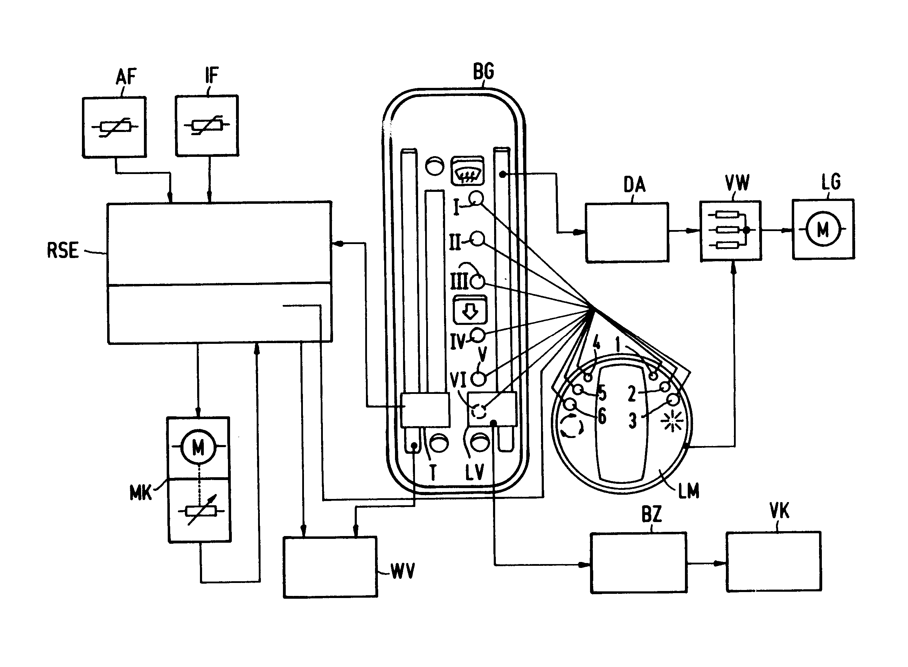

Die Erfindung wird im folgenden anhand eines schematisch dargestellten Ausführungsbeispiels in der Zeichnung näher erläutert.

In der Bedienebene eines Kraftfahrzeuges, z.B. dem Armaturenbrett, sind ein Bediengerät BG mit einem Temperatur-Einstellmittel T und ein Luftverteilungs-Einstellmittel LV jeweils in Form eines Schiebestellers und ein Luftmengen-Einstellmittel LM in Form eines Drehstellers mit einem Bereich für Frischluftbetrieb und einem Bereich für Umluftbetrieb angeordnet. Der vom Temperatur-Einstellmittel T vorgegebene Wert für die gewünschte Innentemperatur des Fahrzeuges wird als Sollwert an eine Regel-Steuer-Einheit RSE abgegeben, dem als Eingangs-Istgrößen die augenblickliche Innentemperatur von einem Innenfühler IF und die Außentemperatur von einem Außenfühler AF zugeliefert werden.

Aufgrund der von der Regel-Steuer-Einheit RSE unter Vorgabe der Soll-Innentemperatur und der tatsächlichen Innentemperatur und Außentemperatur errechneten Werte werden ein Stellantrieb für eine Warmluft- und Kaltluft in bestimmter Weise vermischende Mischluftklappe und ein Wasserventil in einem Wärmetauscher des Heiz- bzw. Klimagerätes betätigt. Darüber hinaus werden von der Regel-Steuer-Einheit RSE errechnete Optimalwerte für die jeweilige Luftverteilung und die jeweilige Luftmenge an eine Kette von LED-Anzeigen I-VI entlang des translatorischen Einstellweges des Luftverteilungs-Einstellmittels und LED-Anzeigen 1-6 entlang des rotatorischen Einstellweges des Luftmengen-Einstellmittels weitergegeben, derart daß jeweils diejenige Leuchtdiode über der Einstellposition aufleuchtet, in die das Einstellmittel nachgeführt werden muß, um die von der Regel-Steuer-Einheit RSE berechneten optimale Luftverteilung bzw. Luftmenge zu erreichen.

In an sich bekannter Weise wird dann entsprechend den jeweiligen Stellungen der Einstellmittel über Vorwiderstände VW das Lüftergebläse LG über das Luftmengen-Einstellmittel LM oder direkt in Defrosterstellung des Luftverteilungs-Einstellmittels mit entsprechender Drehzahl betätigt bzw. in Abhängigkeit von der jeweiligen Stellung des Luftverteilungs-Einstellmittels LV über einen Bowdenzug BZ die entsprechende Verteilerklappe VK zur Verteilung der Luft in die Scheibenebene, die Mittelebene oder die Fußebene verstellt.

Die Erfindung wurde vorgehend anhand eines Heizgerätes erläutert, selbstverständlich läßt sich das Erfindungsprinzip auch auf ein Klimagerät anwenden, bei dem dann zumindest zusätzlich noch über eine Magnetkupplung ein Kühlkompressor zuschaltbar ist.

## Patentansprüche

1. Heiz- bzw. Klimagerät für ein Kraftfahrzeug mit zumindest einem Luftverteilungs-Einstellmittel (LV) und Luftmengen-Einstellmittel (LM) sowie mit einer Regel-Steuer-Einheit (RSE) zur Ermittlung optimaler Einstellwerte für die Luftverteilung und Luftmenge aufgrund eines vorgebbaren Innentemperatur-Sollwertes durch ein Temperatur-Einstellmittel (T) und aufgrund von Istwerten der Innentemperatur und gegebenenfalls Außentemperatur, **dadurch gekennzeichnet**, daß die von der Regel-Steuer-Einheit (RSE) errechneten Optimalwerte der Einstellwerte für die Luftverteilung und die Luftmenge als Anzeigewerte (I-IV, bzw. 1-6) für ein manuelles Nachführen des Luftverteilungs-Einstellmittels (LV) und des Luftmengen-Einstellmittels (LM) in einer Bedienungsebene (Bediengerät BG) des Kraftfahrzeuges angezeigt werden.

2. Heiz- bzw. Klimagerät nach Anspruch 1, **dadurch gekennzeichnet**, daß die Anzeigewerte durch Leucht-tanzeigen, insbesondere LED-Anzeigen (I-VI bzw,1-6), angegeben sind.

3. Heiz- bzw. Klimagerät nach Anspruch 2, **dadurch gekennzeichnet**, daß die LED-Anzeigen entlang des Einstellweges des Luftverteilungs-Einstellmittels (LV) bzw. des Luftmengen-Einstellmittels (LM) angeordnet und die jeweilige Einstellposition des nachzuführenden Einstellmittels durch Aufleuchten einer positionsentsprechenden LED-Anzeige dargestellt sind.


## Claims

1. Heating and air-conditioning device for a motor vehicle, with at least one air-distribution adjusting means (LV) and air volume adjusting means (LM) as well as having a regulating control unit (RSE) for the determination of optimum adjustable values for the air distribution and air volume as a result of a specifiable desired value for the internal temperature by means of a temperature adjusting means (T) and as a result of actual values of the internal temperature and possibly the external temperature, characterized in that the optimum values of the adjustable values, calculated by the regulating-control unit (RSE), for the air distribution and the air volume, are displayed as display values (I-IV, or 1-6) for a manual guidance of the air-distribution adjusting means (LV) and of the air volume adjusting means (LM) in an operating plane (operating device BG) of the motor vehicle.

2. Heating and air-conditioning device according to claim 1, characterized in that the display values are indicated by light displays, in particular LED-displays (I-VI or 1-6).

3. Heating and air-conditioning device according to claim 2, characterized in that the LED-displays are arranged along the adjusting path of the air-distribution adjusting means (LV) or of the air volume adjusting means (LM) and the respective adjusting position of the adjusting means to be guided is represented by the illumination of a position-corresponding LED-display.


## Revendications

1. Appareil de chauffage ou de climatisation pour un véhicule automobile, comportant au moins un moyen (LV) de réglage de la distribution de l'air et un moyen (LM) de réglage de la quantité d'air, ainsi qu'une unité de régulation et de commande (RSE) servant à déterminer des valeurs de réglage optimales pour la distribution de l'air et la quantité de l'air, sur la base d'une valeur de consigne de la température intérieure, pouvant être prédéterminée, à l'aide d'un moyen (T) de réglage de la température, et sur la base de valeurs réelles de la température intérieure et éventuellement de la température extérieure, caractérisé par le fait que les valeurs optimales calculées par l'unité de régulation et de commande (RSE) des valeurs de réglage pour la distribution de l'air et la quantité de l'air sont affichées, en tant que valeurs d'affichage (I-IV, ou 1-6) pour un asservissement manuel du moyen (LV) de réglage de la distribution de l'air et du moyen (LM) de réglage de la quantité d'air, dans un plan de commande (appareil de commande BG) du véhicule automobile.

2. Appareil de chauffage ou de climatisation suivant la revendication 1, caractérisé par le fait que les valeurs d'affichage sont indiquées par des dispositifs d'affichage lumineux, notamment des dispositifs d'affichage LED (I-VI ou 1-6).

3. Appareil de chauffage ou de climatisation suivant la revendication 2, caractérisé par le fait que les dispositifs d'affichage LED sont disposés le long du trajet de réglage du moyen (LV) de réglage de la distribution de l'air ou du moyen (LM) de réglage de la quantité d'air, et la position respective de réglage du moyen de réglage devant être asservi est représentée au moyen de l'éclairement d'un dispositif d'affichage LED corres-pondant à cette position.